Europäisches Patentamt

European Patent Office

Office européen des brevets

(11) EP 1 450 421 A1

(19)

(12) **EUROPEAN PATENT APPLICATION**

(43) Date of publication:
25.08.2004 Bulletin 2004/35

(51) Int Cl.⁷: $H01M\ 2/12$

(21) Application number: 04002156.0

(22) Date of filing: 30.01.2004

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 10.02.2003 JP 2003032523

(71) Applicant: TOYOTA JIDOSHA KABUSHIKI
KAISHA
Aichi-ken 471-8571 (JP)

(72) Inventor: Arakawa, Hiroshi
Toyota-shi, Aichi-ken 471-8571 (JP)

(74) Representative: KUHNEN & WACKER
Patent- und Rechtsanwaltsbüro
Prinz-Ludwig-Strasse 40A
85354 Freising (DE)

(54) **Lithium ion secondary battery comprising a safety mechanism**

(57) An safety valve (14) for discharging decomposition gas of an electrolytic solution, which is generated inside a battery when the battery is overcharged, to an outside of the battery is provided in a lithium ion secondary battery (10). By setting a valve opening pressure of the safety valve (14) to 0.54 MPa, the safety valve (14) is opened approximately 95 seconds before an inside short-circuit occurs when the battery is overcharged, and the decomposition gas of the electrolytic solution is discharged outside the battery promptly.

FIG. 5

**Description**

BACKGROUND OF THE INVENTION

1. Field of the Invention

The invention relates to a lithium ion secondary battery including a safety mechanism for discharging decomposition gas of an electrolytic solution, which is generated inside the battery when the battery is overcharged, to the outside of the battery. More particularly, the invention relates to a lithium ion secondary battery whose safety is enhanced by controlling activation time of a safety mechanism, and a design method thereof. Particularly, the lithium ion secondary battery according to the invention is preferably used as a battery for a vehicle.

2. Description of the Related Art

In recent years, a battery is required to output a large amount of electric power and to store a large amount of energy. Therefore, a lithium ion secondary battery is widely used. Particularly, as a battery which requires high energy density, such as a battery for an automobile, a lithium ion secondary battery is drawing considerable attention. In the lithium ion secondary battery, a positive electrode and a negative electrode are provided so as to face each other through a separator in the sealed battery case, and current is obtained by causing an electrode reaction between the positive electrode and the negative electrode.

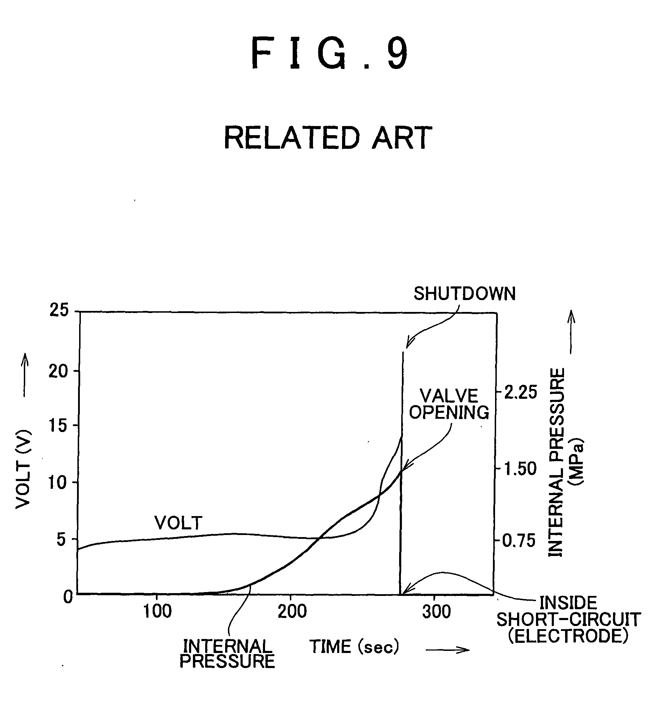

If the lithium ion secondary battery is overcharged and an unusual amount of electric charge is stored in the battery due to loss of control of a system or the like, the gas which is generated due to a chemical reaction of a battery material, particularly due to decomposition of an electrolytic solution fills a battery case. As a result, as shown in FIG. 9, an internal pressure of the battery case increases. In addition, the temperature further increases due to heat of reaction generated by progress of the chemical reaction, Joule's heat generated by charging current, and the like. Then, the separator is clogged due to shutdown effect of the separator, and consequently, a lithium ion cannot pass through the separator. Therefore, internal resistance increases, and a voltage rapidly increases, as shown in FIG. 9. When the internal temperature exceeds the heat resistant temperature of the separator, the separator melts and ruptures and a short circuit occurs inside the battery (hereinafter, referred to as an "inside short-circuit).

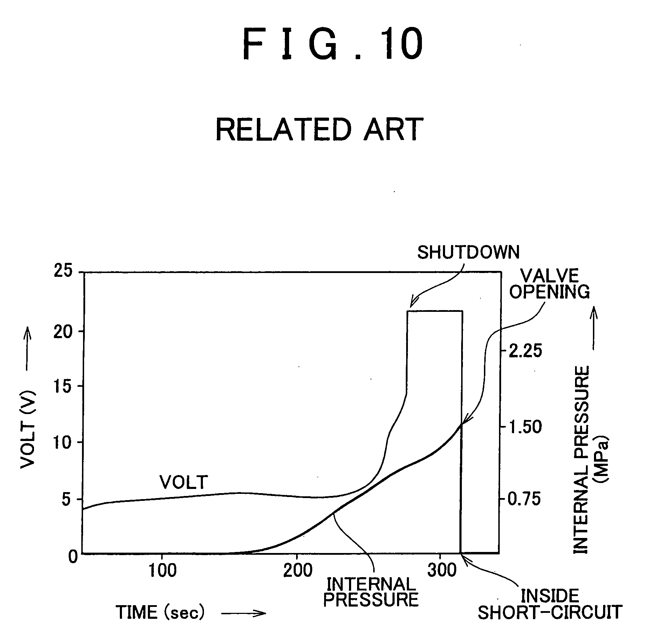

In FIG. 9, the case where a shutdown and an inside short-circuit occur substantially simultaneously is shown as an example. However, there is another case where an inside short-circuit occurs after a lapse of short time since shut down occurs, as shown in FIG. 10. The time after a shutdown occurs until an inside short-circuit occurs increases with a decrease in an amount of current when the battery is overcharged.

As mentioned above, it is undesirable that the battery be overcharged and abnormal current flow. Therefore, in order to prevent the battery from being overcharged and the abnormal current from flowing, an electronic control circuit is embedded in a battery pack. When electric power whose amount is equal to or larger than a predetermined value is charged to the battery, the electronic control circuit detects an abnormality and opens a charging/discharging circuit so as to interrupt the current. Further, in order to prevent a rupture of the battery case even in the event of a breakdown of the electronic control circuit, there is provided a safety mechanism for discharging the gas filled in the battery case to the outside of the battery when the pressure inside the battery case exceeds a predetermined value.

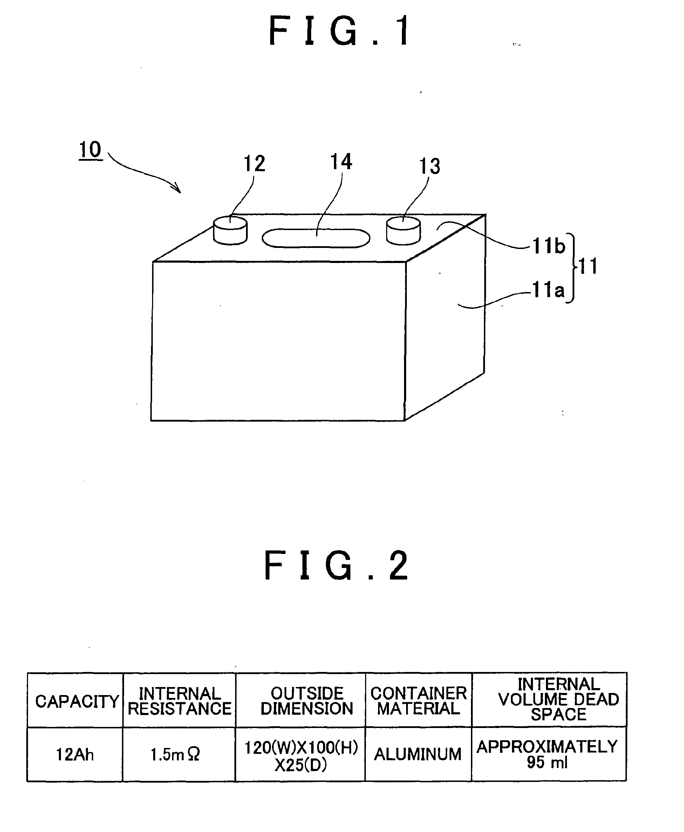

An example of such a safety mechanism is disclosed in Japanese Patent Laid-Open Publication No. 2002-75314 (page 4 and 5, FIG. 1). The safety mechanism disclosed in the publication includes a counterbore portion which communicates with an air hole that is formed at least one of a metal battery case and a battery lid which have ductility and which form a sealed container; a safety valve element which is provided on a bottom face of the counterbore portion while blocking an opening end of the air hole and which is made of a metal sheet; and a fixing portion which is formed due to plastic deformation of a material of a periphery portion of the counterbore portion and which fixes a periphery portion of the safety valve element in a sealed state with the bottom face of the counterbore portion.

However, with the above-mentioned safety mechanism, it is not possible to reliably prevent a reaction of the decomposition gas, which spouts when the safety mechanism is activated, and a spark due to an inside short-circuit. This problem occurs because the safety mechanism is activated substantially simultaneously with the timing at which an inside short-circuit occurs, as shown in FIG. 9 in Japanese Patent Laid-Open Publication No. 2002-75314. Namely, the problem occurs because the safety mechanism is not activated until moment immediately before the battery case ruptures. Therefore, there is a possibility that the spouted decomposition gas, and a spark due to an inside short-circuit will react with each other when the safety mechanism is activated.

Also, with the safety mechanism disclosed in Japanese Patent Laid-Open Publication No. 2002-75314, it is possible to set a working pressure of the safety valve element to a low value. However, if the safety valve element is opened simultaneously with an inside short-circuit, there is a possibility that the decomposition gas discharged outside the battery and the spark due to an inside short-circuit react with each other.

SUMMARY OF THE INVENTION

It is an object of the invention to reliably activate a safety mechanism before an inside shot-circuit occurs so as to enhance safety, by controlling activation time of the safety mechanism.

A first aspect of the invention relates to a lithium ion secondary battery including a safety mechanism for discharging decomposition gas of an electrolytic solution, which is generated inside the battery when the battery is overcharged, to the outside of the battery. The safety mechanism of the lithium ion secondary battery is activated before an inside short-circuit occurs so as to discharge the decomposition gas of the electrolytic solution, which is generated inside of the battery, to the outside of the battery.

The lithium ion secondary battery includes the safety mechanism for discharging the decomposition gas of the electrolytic solution, which is generated inside the battery when the battery is overcharged, to the outside of the battery. The safety mechanism is activated before an inside short-circuit occurs so as to discharge the decomposition gas of the electrolytic solution, which is generated inside of the battery, to the outside of the battery. Namely, the safety mechanism is activated before an inside short-circuit occurs. As a result, it is possible to reliably prevent the safety mechanism from being activated simultaneously with the occurrence of an inside short-circuit. Therefore, the decomposition gas of the electrolytic solution, which is generated inside the battery, can be discharged outside the battery promptly. Therefore, when the battery is further overcharged and an inside short-circuit occurs, the concentration of the gas discharged outside the battery has become low. Therefore, it is possible to prevent the reaction of the decomposition gas of the electrolytic solution, which is discharged outside the battery, and a spark due to an inside short-circuit. As a result, safety of the battery is enhanced.

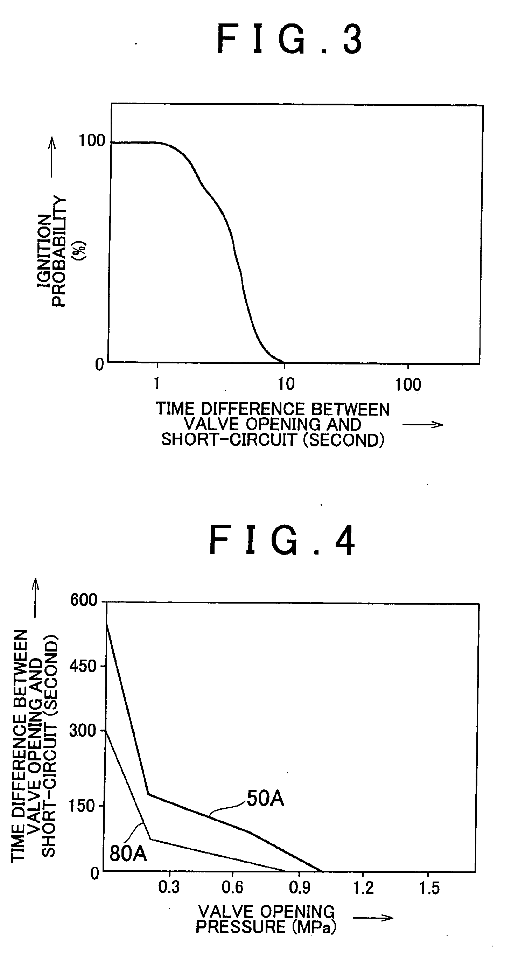

More particularly, it is desirable that the safety mechanism be activated ten seconds or more before an inside short-circuit occurs. When there is time of ten seconds or more after the safety mechanism is activated until an inside short-circuit occurs, it is possible to reliably prevent the reaction of the decomposition gas, which is discharged outside the battery, and the spark due to the inside short-circuit (refer to FIG. 3). Thus, it is possible to obtain a higher level of safety.

It is desirable that the safety mechanism be a safety valve which opens when a pressure reaches a preset pressure. By using such a safety valve, a lithium ion secondary battery with a high level of safety can be realized by a considerably simple configuration. As a safety valve, a safety valve having a conventional configuration can be used with the preset pressure changed.

The preset pressure is set such that the safety valve opens ten seconds or more before an inside short-circuit occurs. As mentioned above, if there is time of ten seconds or more after the safety valve (safety mechanism) is activated until an inside short-circuit occurs, it is possible to reliably prevent the reaction of the decomposition gas, which is discharged outside the battery, and the spark due to an inside short-circuit. Therefore, it is possible to obtain a considerably high level of safety.

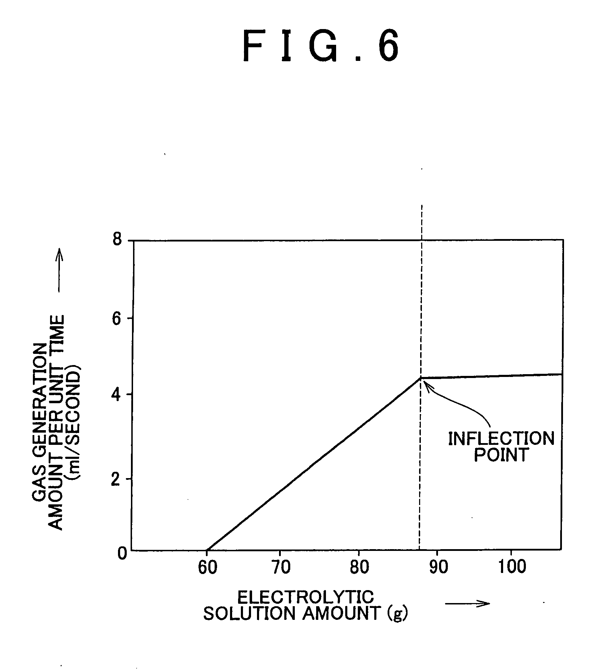

Also, it is preferable that an amount of the electrolytic solution to be provided into the battery be set equal to or larger than an amount at which an inflection point, that is related to the generation amount of the decomposition gas per unit time when the battery is overcharged, appears. In this specification, the "inflection point related to the generation amount of the decomposition gas" signifies the point at which the generation amount of the decomposition gas per unit time when the battery is overcharged with respect to the amount of the electrolytic solution changes, that is, the point at which the inclination of the graph shown in FIG. 6 changes.

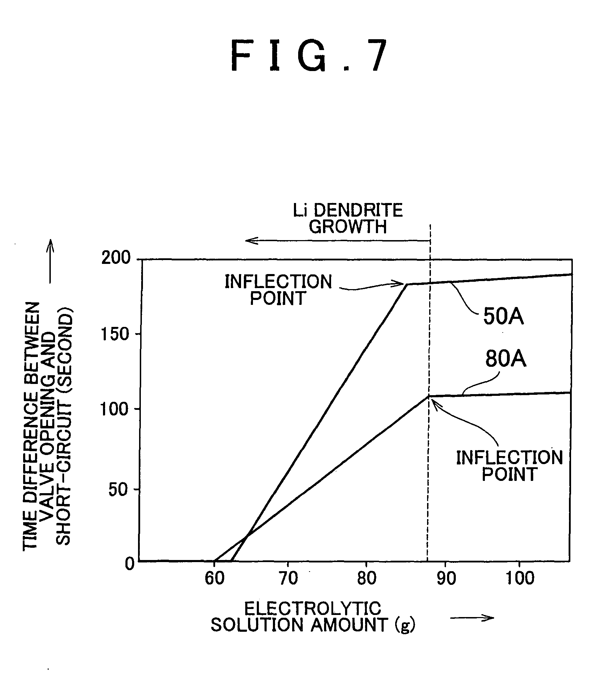

When the amount of the electrolytic solution is increased, the amount of the electrolytic solution and the gas generation amount per unit time when the battery is overcharged are directly proportional until the amount of the electrolytic solution reaches a certain value. However, when the amount of the electrolytic solution exceeds the certain value, the gas generation amount per unit time hardly changes. Then, when the amount of the electrolytic solution is smaller than the amount at which the inflection point appears, lithium is precipitated on the electrode and an inside short-circuit due to dendrite growth is likely to occur. Therefore, by setting the amount of the electrolytic solution to an amount equal to or larger than the amount at which the inflection point appears, lithium is not precipitated. As a result, an inside short-circuit is difficult to cause. Also, by setting the amount of the electrolytic solution to an amount equal to or larger than the amount at which the inflection point appears, it is possible to obtain ten seconds or more after the safety mechanism is activated until an inside short-circuit occurs (refer to FIG. 7). Accordingly, it is possible to reliably prevent the reaction of the decomposition gas, which is discharged outside the battery, and the spark due to the inside circuit. As a result, it is possible to obtain a considerably high level of safety.

The first aspect of the invention is preferably applied to a lithium ion secondary battery which is used as a battery for a vehicle. This is because it is desirable to activate the safety mechanism promptly since the size of the battery for a vehicle is large. Also, this is because there is a space (for example, a space under a bonnet) to which gas can be discharged.

A second aspect of the invention relates to a method for designing a lithium ion secondary battery which discharges decomposition gas of an electrolytic solution, which is generated inside a battery when the battery is overcharged, to the outside of the battery. In the method, the lithium ion secondary battery is designed such that a safety mechanism is activated before an inside short-circuit occurs so as to discharge the decomposition gas of the electrolytic solution, which is generated inside the battery, to the outside of the battery, based on a first time which is after overcharging is started until discharging the decomposition gas to the outside of the battery is started, and a second time which is after overcharging is started until the inside short-circuit occurs.

When the lithium ion secondary battery is thus designed, it is possible to prevent reaction of the decomposition gas, which is discharged outside the battery, and the spark due to the inside short-circuit.

The battery may be designed such that a difference between the second time and the first time is ten seconds or more.

The safety mechanism has a safety valve which opens so that the decomposition gas is discharged outside the battery when a pressure in the battery reaches a preset pressure. In this case, the preset pressure may be set based on a relationship between the pressure at which the safety valve opens, and the difference between the second time and the first time.

The preset pressure may be set based on charging current of the battery.

An amount of the electrolytic solution to be provided into the battery may be set based on a relationship between the amount of the electrolytic solution and the difference between the second time and the first time.

The amount of the electrolytic solution to be provided into the battery may be set based on the charging current of the battery.

BRIEF DESCRIPTION OF THE DRAWINGS

The forgoing and further objects, features and advantages of the invention will become apparent from the following description of preferred embodiments with reference to the accompanying drawings, wherein like numerals are used to represent like elements and wherein:

FIG. 1 is a perspective view showing a lithium ion secondary battery according to an embodiment of the invention;
FIG. 2 is a table showing specifications of the lithium ion secondary battery according to the embodiment of the invention;
FIG. 3 is a graph showing a relationship between a time difference between time when a safety valve opens and time when an inside short-circuit occurs, and a probability of ignition (hereinafter, referred to as an "ignition probability");
FIG. 4 is a graph showing a relationship between a valve opening pressure of the safety valve, and the time difference between the time when the safety valve opens and the time when an inside short-circuit occurs;
FIG. 5 is a graph showing changes in an internal pressure of the battery and a voltage when the battery is overcharged in the case where the valve opening pressure is set to 0.54 MPa in the lithium ion secondary battery according to the embodiment of the invention;
FIG. 6 is a graph showing a relationship between an amount of an electrolytic solution, and the time difference between the time when the safety valve opens and the time when an inside short-circuit occurs;
FIG. 7 is a graph showing a relationship between the amount of the electrolytic solution, and the time difference between the time when the safety valve opens and the time when an inside short-circuit occurs;
FIG. 8 is a graph showing changes in the internal pressure of the battery and the voltage when the battery is overcharged in the case where the amount of the electrolytic solution is set to 95g, in the lithium ion secondary battery according to the embodiment of the invention;
FIG. 9 is a graph showing changes in the internal pressure of the battery and the voltage when the lithium ion secondary battery is overcharged in the case where a shutdown and an inside short-circuit occur simultaneously; and
FIG. 10 a graph showing changes in the internal pressure of the battery and the voltage when the lithium ion secondary battery is overcharged in the case where the shutdown and an inside short-circuit do not occur simultaneously.

DETAILED DESCRIPTION OF THE PREFERRED EMBODIMENTS

Hereafter, a preferred embodiment of a lithium ion secondary battery according to the invention will be described with reference to accompanying drawings.

First, a schematic configuration of a lithium ion secondary battery (a battery exclusive to an automobile) according to an embodiment of the invention is shown in FIG. 1. FIG. 1 is a perspective view showing the schematic configuration of the lithium ion secondary battery. A lithium ion secondary battery 10 according to the embodiment has a rectangular-box shape, as shown in FIG. 1. A positive electrode 12, a negative electrode 13 and a safety valve 14, which is a safety mechanism, are provided on a top surface of a battery case 11.

The battery case 11 includes a rectangular-box shaped battery can 11a whose top face is open and a lid plate 11b which is engaged with the opening of the battery can 11a. The battery can 11a and the lid plate 11b are not affected by an electrolytic solution, and need a certain level of mechanical strength at which the battery can 11a and the lid plate 11b are not easily deformed. Therefore, aluminum, an aluminum alloy, stainless steel, or the like is used as a material. In the embodiment, as a material of the battery case 11, aluminum is used. Then, by bonding the battery can 11a and the lid plate 11b to each other by welding or the like, the battery case 11 is made to have a sealed configuration.

The specifications of the lithium ion secondary battery 10 are shown in FIG. 2. The lithium ion secondary battery 10 has a capacity of 12Ah, and internal resistance of 1. 5m$\Omega$, as shown in FIG. 2. The outside dimension of the lithium ion secondary battery 10 is 120 mm (W) $\times$ 100 mm (H) $\times$ 25 mm (D). Since the thickness of the aluminum used for the battery case 11 is 1 mm, the internal volume of the lithium ion secondary battery is 118 mm (W) $\times$ 98 mm (H) $\times$ 13 mm (D) = 266 mL. The dead space of the lithium ion secondary battery 10 is approximately 95 mL.

An electrode body (not shown) which is inserted into the battery case 11 together with the electrolytic solution is constructed by forming an active material, which causes an electromotive reaction, in a laminating manner on a surface of a current-collecting foil, and laminating positive electrodes and negative electrodes with separators interposed therebetween. As a method of laminating the electrodes, a lamination type method or a roll type method can be employed. In the lamination type method, several to several tens of the positive electrodes and several to several tens of the negative electrodes are used, and the positive electrodes and the negative electrodes are laminated alternatively. In the roll type method, one positive strip electrode and one negative strip electrode, are used and the positive electrode and the negative electrode are rolled so as to be laminated in a roll shape or a flat roll shape.

Two through-holes are formed in the lid plate 11b. The positive electrode 12 and the negative electrode 13 are fixed so as to protrude from the through-holes. The positive electrode 12 and the negative electrode 13 are connected to the electrode body.

The safety valve 14 provided on the top surface of the battery case 11, that is, on the lid plate 11b is formed by forming a groove on a metal foil. The safety valve 14 is configured to open when the pressure inside the battery case 11 reaches a predetermined value and the groove portion breaks off. When the battery is overcharged, the electrolytic solution is decomposed, the decomposition gas fills the battery case 11, the pressure inside the battery case 11 increase and reaches a predetermined value, the safety valve 14 opens so as to discharge the decomposition gas filled in the battery case to the outside of the battery. The safety valve 14 opens ten seconds or more before an inside short-circuit occurs. Thus, the safety valve 14 does not open simultaneously with the inside short-circuit.

In the lithium ion secondary battery 10 according to the embodiment, by controlling the valve opening time of the safety valve 14, the safety valve 14 opens ten seconds or more before the inside short-circuit occurs. Thus, the concentration of the decomposition gas discharged outside the battery becomes low before the inside short-circuit occurs. In this manner, the spark which occurs outside the secondary battery 10 through the safety valve 14 when an inside short-circuit occurs, and the decomposition gas discharged outside the battery do not react with each other.

Hereafter, the reason why opening of the safety valve 14 is performed ten seconds or more before an inside short-circuit occurs will be described. The inventor conducted a study concerning the relationship between the time difference between the time when the safety valve opens and the time when an inside short-circuit occurs, and the ignition probability by experiment, in order to find the optimum opening time of the safety valve for obtaining a high level of safety. FIG. 3 shows a result of the experiment. The ignition probability signifies the percentage of the case where the decomposition gas discharged outside the battery and the spark due to the inside short-circuit reacted with each other and ignition occurred.

According to FIG. 3, when the time difference between the time when the safety valve opens and the time when an inside short-circuit occurs is shorter than ten seconds, the ignition probability increases abruptly. As the time difference decreases, the ignition probability increases. On the other hand, when the time difference is equal to or longer than ten seconds, the ignition probability is 0%. Through the experiment, the inventor found that by obtaining the time difference of ten seconds of more between the time when the safety valve opens and the time when an inside short-circuit occurs, the ignition probability is 0%, that is, that the decomposition gas which is discharged outside the battery and the spark due to an inside short-circuit do not react with each other and the battery case is not ruptured. Accordingly, it is decided that the safety valve 14 is opened ten seconds or more before an inside short-circuit occurs.

By securing the time difference of ten seconds of more between the time when the safety valve opens and the time when an inside short-circuit occurs, it is possible to reliably prevent the reaction of the decomposition gas which is discharged outside the battery and the spark due to an inside short-circuit. Also, it is possible to reliably prevent the rupture of the battery case. As a result, it is possible to enhance a level of safety.

Next, concrete methods for securing the time difference of ten seconds or more between the time when the safety valve opens and the time when an inside short-circuit occurs will be described. As a first method, a method for setting the valve opening pressure of the safety valve 14 to a low value and opening the safety valve 14 promptly will be described. The inventor conducted an experiment in order to find the optimum valve opening pressure of the safety valve 14. Through the experiment, the inventor examined the time difference between the time when the safety valve opens and the time when an inside short-circuit occurs in the case where the valve opening pressure is changed. FIG. 4 shows a result of the experiment. In FIG. 4, a valve opening pressure x at which the time difference y of ten seconds or more can be obtained is calculated according to an approximate expression. A reference character "x" signifies a valve opening pressure, and a reference character "y" signifies a time difference.

When the charging current is 50A, the expression is as follows.

$$y = - 0.00003x^6 + 0.00011x^5 + 0.02645x^4 - 0.60881x^3 + 5.3681x^2 - 22.837x + 527.16$$

Therefore, the valve opening pressure x at which the time difference y is equal or longer than ten seconds is lower than 0.911 MPa.

When the charging current is 80A, the expression is as follows.

$$y = 0.00012x^6 - 0.00674x^5 - 0.14331x^4 - 1050521x^3 + 8.1251x^2 - 22.042x + 309.9$$

Therefore, the valve opening pressure x at which the time difference y is equal or longer than ten seconds is lower than 0.812 MPa.

As shown in FIG. 4, the relationship between the valve opening pressure x and the time difference y depends on the strength of the current. Therefore the valve opening pressure of the safety valve needs to be set on the assumption that the charging current is at the maximum level. Since the maximum charging current of the lithium ion secondary battery 10 according to the embodiment is 50A, the valve opening pressure of the safety valve 14 is set to 0.54 MPa, after obtaining the valve opening pressure x in consideration of the safety.

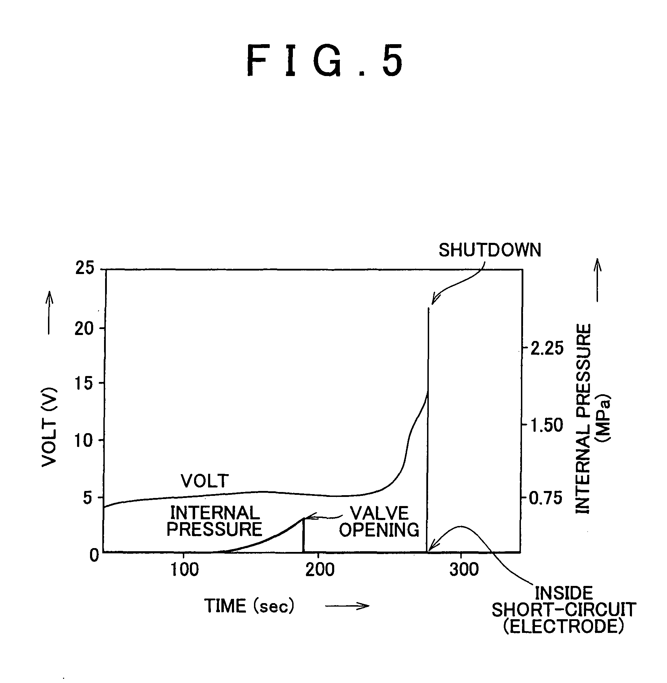

When the valve opening pressure of the safety valve 14 was set to 0.54 MPa and the battery was overcharged (charging current of 50A), as shown in FIG. 5, the safety valve 14 opened approximately 95 seconds before an inside short-circuit occurred, and the decomposition gas filled in the battery case 11 was discharged outside the battery. As a result, the spark due to the inside short-circuit and the discharged decomposition gas did not react each other. Also, the battery case 11 was not ruptured. Therefore, by setting the valve opening pressure of the safety valve 14 to 0.54 MPa, it is possible to open the safety valve 14 ten seconds or more before an inside short-circuit occurs. As a result, it is possible to obtain a considerably high level of safety.

Next, as a second method, a method for adjusting the amount of the electrolytic solution will be described. The amount of the electrolytic solution is set to an amount equal to or larger than the amount at which the inflection point, that is related to the generation amount of the decomposition gas per unit time when the battery is overcharged, appears. The valve opening pressure of the safety valve 14 is set to 0.15 MPa.

In this case, the "inflection point related to the generation amount of the decomposition gas" signifies the point at which the amount of the decomposition gas, which is generated per unit time when the battery is overcharged, with respect to the amount of the electrolytic solution changes, that is, the point at which the inclination of the graph shown in FIG. 6 changes. The example shown in FIG. 6 will be described in detail. In the case where the amount of the electrolytic solution is smaller than 88g, when the amount of the electrolytic solution increases, the amount of the decomposition gas generated per unit time increases proportionately. However, when the amount of the electrolytic solution is equal to or larger tan 88g, the amount of the decomposition gas generated per unit time does not change. Namely, the change rate of the decomposition gas per unit time with respect to the amount of the electrolytic solution when the amount of the electrolytic solution is smaller than 88g differs from that when the amount of the electrolytic solution is equal to or larger than 88g. Therefore, the inflection point related to the generation amount of the decomposition gas is "88g" in the example.

Generally, when the amount of the electrolytic solution is insufficient (when the amount of the electrolytic solution is smaller than the amount at which the inflection point appears), lithium is precipitated on the electrode and an inside short-circuit due to dendrite growth is likely to occur. When the amount of the electrolytic solution becomes smaller than the amount at which the inflection point, that is related to the generation amount of the decomposition gas per unit time, appears, precipitation of the lithium starts (refer to FIG. 7). Therefore, it is necessary to set the amount of the electrolytic solution to an amount equal to or larger than the amount at which an inflection point, that is related to the generation amount of the decomposition gas per unit time when the battery is overcharged, appears.

The inventor then conducted an experiment in order to find the optimum amount of the electrolytic solution. Through the experiment, the inventor examined the time difference between the time when the safety valve opens and the time when an inside short-circuit occurs in the case where the amount of the electrolytic solution is changed. FIG. 7 shows the result of the experiment. In FIG. 7, an amount X of the electrolytic solution at which time difference y of ten seconds or more can be obtained is calculated according to an approximate expression. A reference character "x" signifies an amount of the electrolytic solution, and a reference character "y" signifies a time difference.

When the charging current is 50A, the expression is as follows

$$y = 8.0869x - 512.67$$

Therefore, the amount of the electrolytic solution x at which the time difference y is ten seconds or more is equal to or larger than 65g.

When the charging current is 80A, the expression is as follows

$$y = 3.3136x - 204.42$$

Therefore, the amount of the electrolytic solution x at which the time difference y is ten seconds or more is equal to or larger than 65g.

Then, the amount of the electrolytic solution is set to 95g in consideration of the facts that the amount of the electrolytic solution needs to be set to a value equal to or larger than the amount at which the inflection point, that is related to the generation amount of the decomposition gas per unit time when the battery is overcharged, appears, that the maximum charging current of the lithium ion secondary battery 10 according to the embodiment is 50A, and the like.

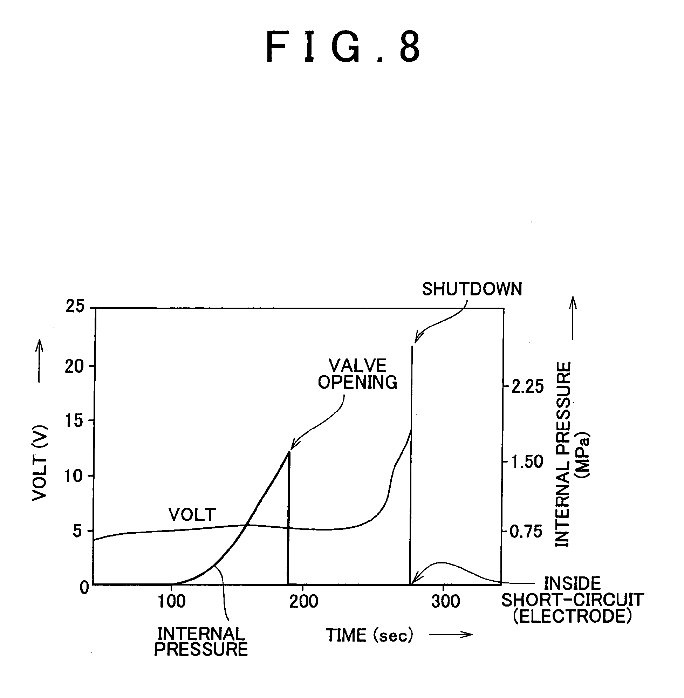

When 95g of the electrolytic solution was supplied and the battery was overcharged (charging current of 50A), as shown in FIG. 8, the safety valve 14 opened approximately 95 seconds before an inside short-circuit occurred, and the decomposition gas filled in the battery case 11 was discharged outside the battery. As a result, the spark due to the inside short-circuit and the discharged decomposition gas did not react with each other. Also, the battery case 11 was not ruptured. Therefore, by setting the amount of the electrolytic solution to 95g, it is possible to open the safety valve 14 ten seconds or more before an inside short-circuit occurs. As a result, it is possible to obtain a considerably high level of safety. Thus, it is possible to enhance the level of safety of the lithium ion secondary battery by adjusting the amount of the electrolytic solution, instead of by adjusting the valve opening pressure.

It is also possible to increase the time difference between the time when the safety valve 14 opens and the time when an inside short-circuit occurs by reducing the dead space of the internal volume. It is also possible to increase the time difference between the time when the safety valve 14 opens and the time when an inside short-circuit occurs by arbitrarily combining decrease in the valve opening pressure of the safety valve 14, adjustment of the amount of the electrolytic solution and the reduction of the dead space of the internal volume. In the case where the above-mentioned methods are arbitrarily combined, when the battery is overcharged at the same ratio (the ratio of the battery capacity to the charging current), the following relationships are established in the opening starting time (time after overcharging is started until the valve opens) of the safety valve 14 and in the short-circuit starting time (time after overcharging is started until an inside short-circuit occurs).

$$\text{(opening starting time)} = \text{(opening starting pressure)} \propto \text{(gas generation amount)}$$

$$\propto \text{(dead space)}$$

$$\text{(short-circuit starting time)} = \text{(heat resistance temperature (melting temperature) of}$$

$$\text{separator)} \propto \text{(temperature increase per unit time)}$$

In consideration of this, the battery needs to be designed such that the following expression is satisfied.

$$\text{(short-circuit starting time)} - \text{(opening starting time)} \geq \text{ten seconds}$$

As described so far, the lithium ion secondary battery 10 according to the embodiment includes the safety valve 14 for discharging the decomposition gas of the electrolytic solution, which is generated inside the battery when the battery is overcharged, to the outside of the battery. The valve opening pressure of the safety valve 14 is set to 0.54 MPa. Thus, the safety valve 14 opens approximately 95 seconds before an inside short-circuit occurs when the battery is overcharged, and the decomposition gas of the electrolytic solution is discharged outside the battery.

Also, in the lithium ion secondary battery according to the embodiment, when the valve opening pressure of the safety valve 14 is not changed from that of a conventional value, by setting the amount of the electrolytic solution to 95g, it is possible to open the safety valve 14 approximately 95 seconds before an inside short-circuit occurs when the battery is overcharged.

As mentioned above, by adjusting the valve opening pressure of the safety valve 14, adjusting the amount of the electrolytic solution or reducing the dead space, it is possible to open the safety valve 14 ten seconds or more before an inside short-circuit occurs. Thus, when the inside short-circuit occurs, the concentration of the decomposition gas discharged outside the battery has become low. Therefore, it is possible to prevent the reaction of the decomposition gas and the spark due to the inside short-circuit. Accordingly, the battery case 11 is not ruptured. As a result, it is possible to obtain a lithium ion secondary battery whose safety level is considerably high.

Also, in a vehicle, there is a space (for example, under a bonnet) to which the decomposition gas can be discharged, and a battery for a vehicle is large. Therefore, applying the above-mentioned lithium ion secondary battery which can activate the safety mechanism promptly to a battery for an automobile, as mentioned above, is effective.

While the invention has been described in detail with reference to the preferred embodiment, it will be apparent to those skilled in the art that the invention is not limited to the above-mentioned embodiment, and that the invention may be realized in various other embodiments within the scope of the invention. Also, the concrete numeric values, such as a valve opening pressure and an amount of an electrolytic solution shown in the embodiment are just examples, and numeric values are not limited to the values shown in the embodiment. The optimum values are decided based on the specifications of the battery.

As described so far, in the lithium ion secondary battery, the safety mechanism is activated before an inside short-circuit occurs so as to discharge the decomposition gas of the electrolytic solution, which is generated in the battery, to the outside of the battery. Therefore, it is possible to promptly discharge the decomposition gas of the electrolytic solution, which is generated inside the battery, to the outside of the battery. When the battery is further overcharged and an inside short-circuit occurs, the concentration of the gas discharged outside the battery has become low. Accordingly, it is possible to prevent the reaction of the decomposition gas of the electrolytic solution, which is discharged outside the battery, and the spark due to an inside short-circuit. As a result, the level of safety is enhanced.

Also, according to the lithium ion secondary battery, the safety mechanism is activated ten seconds or more before an inside short-circuit occurs. Therefore, it is possible to reliably prevent the reaction of the decomposition gas discharged outside the battery and the spark due to an inside short-circuit. As a result, it is possible to obtain a higher level of safety.

**Claims**

1.  A lithium ion secondary battery comprising a safety mechanism for discharging decomposition gas of an electrolytic solution, which is generated inside the lithium ion secondary battery when the lithium ion secondary battery is overcharged, to an outside of the lithium ion secondary battery, **characterized in that** the safety mechanism is activated before an inside short-circuit occurs, and discharges the decomposition gas of the electrolytic solution, which is generated inside the lithium ion secondary battery, to the outside of the lithium ion secondary battery.

2.  The lithium ion secondary battery according to claim 1, wherein the safety mechanism is activated ten seconds or more before the inside short-circuit occurs.

3.  The lithium ion secondary battery according to claim 1 or 2, wherein the safety mechanism is a safety valve (14) which opens when a pressure in the lithium ion secondary battery (10) reaches a preset pressure.

4.  The lithium ion secondary battery according to claim 3, wherein the preset pressure is set such that the safety valve (14) opens ten seconds or more before the inside short circuit occurs.

5.  The lithium ion secondary battery according to any one of claims 1 to 4, wherein an amount of the electrolytic solution provided into the lithium ion secondary battery is equal to or larger than an amount at which an inflection point, that is related to a generation amount of the decomposition gas per unit time when the lithium ion secondary battery is overcharged, appears.

6.  The lithium ion secondary battery according to any one of claims 1 to 5, wherein the lithium ion secondary battery is mounted on a vehicle.

7.  A method for designing a lithium ion secondary battery including a safety mechanism which discharges decomposition gas of an electrolytic solution, that is generated inside the lithium ion secondary battery when the lithium ion secondary battery is overcharged, to an outside of the lithium ion secondary battery, **characterized in that** the lithium ion secondary battery is designed such that the safety mechanism is activated before an inside short-circuit occurs so as to discharge the decomposition gas of the electrolytic solution, which is generated inside the lithium ion secondary battery, to the outside of the lithium ion secondary battery, based on a first time which is after overcharging is started until discharging the decomposition gas to the outside of the lithium ion secondary battery is started, and a second time which is after overcharging is started until the inside short-circuit occurs.

8. The method according to claim 7, wherein the lithium ion secondary battery is designed such that a difference between the second time and the first time is ten seconds or more.

9. The method according to claim 7 or 8, wherein the safety mechanism has a safety valve (14) which opens when a pressure in the lithium ion secondary battery (10) reaches a preset pressure, when the safety valve (14) opens, the decomposition gas is discharged outside the lithium ion secondary battery, and the preset pressure is set based on a relationship between the pressure at which the safety valve (14) opens, and the difference between the second time and the first time.

10. The method according to claim 9, wherein the preset pressure is set based on charging current of the lithium ion secondary battery (10).

11. The method according to any one of claims 7 to 10, wherein an amount of the electrolytic solution to be provided into the lithium ion secondary battery (10) is set based on a relationship between the amount of the electrolytic solution and the difference between the second time and the first time.

12. The method according to claim 11, wherein the amount of the electrolytic solution to be provided into the lithium ion secondary battery (10) is set based on the charging current of the lithium ion secondary battery (10).

# FIG.1

# FIG.2

| CAPACITY | INTERNAL RESISTANCE | OUTSIDE DIMENSION | CONTAINER MATERIAL | INTERNAL VOLUME DEAD SPACE |
|---|---|---|---|---|
| 12Ah | 1.5mΩ | 120(W)X100(H) X25(D) | ALUMINUM | APPROXIMATELY 95 ml |

# FIG.3

# FIG.4

# FIG.5

# F I G . 6

INFLECTION POINT

GAS GENERATION AMOUNT PER UNIT TIME (ml/SECOND)

ELECTROLYTIC SOLUTION AMOUNT (g)

# FIG.7

# F I G . 8

# F I G . 9

## RELATED ART

# F I G . 10

# RELATED ART

**European Patent Office**

# EUROPEAN SEARCH REPORT

**Application Number**

EP 04 00 2156

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 707 756 A (KAGAWA YOSHIKATSU ET AL) 13 January 1998 (1998-01-13)<br>* column 2, lines 31-57 *<br>* column 3, line 57 - column 4, line 28 *<br>* column 6, line 57 - column 7, line 12 *<br>----- | 1-12 | H01M2/12 |
| X,D | PATENT ABSTRACTS OF JAPAN vol. 2002, no. 07, 3 July 2002 (2002-07-03)<br>& JP 2002 075314 A (MATSUSHITA ELECTRIC IND CO LTD; IKKO SEIKO KK), 15 March 2002 (2002-03-15)<br>* abstract *<br>----- | 1-12 | |
| A | PATENT ABSTRACTS OF JAPAN vol. 0185, no. 73 (E-1624), 2 November 1994 (1994-11-02)<br>& JP 6 215760 A (TOSHIBA BATTERY CO LTD; others: 02), 5 August 1994 (1994-08-05)<br>* abstract *<br>----- | 1-12 | |
| A | US 6 413 679 B1 (KUBOKI TAKASHI ET AL) 2 July 2002 (2002-07-02)<br>* column 1, lines 48-57; claim 1 *<br>----- | 5,11 | TECHNICAL FIELDS SEARCHED (Int.Cl.7)<br><br>H01M |

The present search report has been drawn up for all claims

| Place of search | Date of completion of the search | Examiner |
|---|---|---|
| Munich | 29 June 2004 | Hammerstein, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 00 2156

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2004

| Patent document cited in search report | | Publication date | Patent family member(s) | | Publication date |
|---|---|---|---|---|---|
| US 5707756 | A | 13-01-1998 | JP | 3511698 B2 | 29-03-2004 |
| | | | JP | 8153536 A | 11-06-1996 |
| | | | JP | 8203526 A | 09-08-1996 |
| | | | JP | 3422119 B2 | 30-06-2003 |
| | | | JP | 8236158 A | 13-09-1996 |
| | | | JP | 8264178 A | 11-10-1996 |
| | | | JP | 8273668 A | 18-10-1996 |
| JP 2002075314 | A | 15-03-2002 | NONE | | |
| JP 6215760 | A | 05-08-1994 | JP | 3290226 B2 | 10-06-2002 |
| US 6413679 | B1 | 02-07-2002 | JP | 2000268794 A | 29-09-2000 |

EPO FORM P0459

For more details about this annex : see Official Journal of the European Patent Office, No. 12/82